(19)

Europäisches
Patentamt
European
Patent Office
Office européen
des brevets

(11) **EP 1 798 571 A2**

(12) **EUROPEAN PATENT APPLICATION**

(43) Date of publication:
**20.06.2007 Bulletin 2007/25**

(51) Int Cl.:
*G01S 13/89* (2006.01)      *H01Q 3/46* (2006.01)
*H01Q 21/06* (2006.01)

(21) Application number: **06255932.3**

(22) Date of filing: **21.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.12.2005 US 303581**

(71) Applicant: **Agilent Technologies, Inc.**
**Santa Clara, CA 95051 (US)**

(72) Inventors:
• **Baharav, Izhak**
  **Palo Alto, CA 94306 (US)**
• **Young, James E.**
  **La Honda, CA 94020 (US)**

• **Taber, Robert C.**
  **Palo Alto, CA 94301 (US)**
• **Weems, William**
  **San Jose, CA 95148 (US)**
• **Lee, Gregory S.**
  **Mountains View, CA 94043 (CA)**
• **Corredoura, Paul L.**
  **Redwood City, CA 94062 (US)**
• **Neil, John M.**
  **Los Altos, CA 94024 (US)**

(74) Representative: **Jehan, Robert et al**
**Williams Powell**
**Morley House**
**26-30 Holborn Viaduct**
**London EC1A 2BP (GB)**

(54) **Microwave imaging device and screening method**

(57)      A handheld microwave imaging device (10) provides screening of objects (150), such as persons and other items. The imaging device (10) includes an antenna array (50) of antenna elements (80), each capable of being programmed with a respective direction coefficient to direct microwave illumination toward a target (155) associated with the object (150), and each capable of being programmed with a respective additional direction coefficient to receive reflected microwave illumination reflected from the target (155). The imaging device (10) further includes a processor (100) operable to measure an intensity of the reflected microwave illumination to determine a value of a voxel within a microwave image of the object (150). The antenna array (50) is compliantly mounted in a first portion (25b) of a support structure (20), while a second portion (25c) of the support structure (20) defines a handle (30) for enabling a user to control movement of the device (10).

FIG. 1

EP 1 798 571 A2

**Description**

The present invention relates to a microwave imaging device, preferably handheld, and to a method of screening an object.

Inspection of persons and other items for weapons and other types of contraband is becoming essential at security checkpoints, such as those found at airports, concerts, sporting events, courtrooms, federal buildings, schools and other types of public and private facilities potentially at risk. Although many security checkpoints include walk-through security inspection systems, such as metal detector walk-through systems or X-ray walk through systems, security personnel still regularly perform handheld screenings on those individuals that fail the walk-through screening. In addition, law enforcement personnel are typically required to perform a handheld screening on suspects and other items to locate and confiscate any dangerous, concealed items.

A common handheld inspection method is physical (visual and/or tactile) inspection of an individual or item by law enforcement or security personnel. However, physical inspection is tedious, unreliable, invasive and wholly objectionable in some cultures. Another common handheld inspection method involves scanning an individual or item with a metal detector wand. However, metal detector wands are prone to false alarms, and are not capable of detecting non-metallic objects, such as plastic or liquid explosives, plastic or ceramic handguns or knives and drugs.

Furthermore, neither physical inspection nor the use of a metal detector wand enables efficient searching of opaque items. For example, when a custom patrol officer stops a truck loaded with boxes or sacks, the officer is not able to quickly ascertain whether there are any dangerous, concealed items in the boxes or sacks.

The present invention seeks to provide an improved inspection device and method.

According to an aspect of the present invention, there is provided a handheld microwave imaging device as specified in claim 1.

According to another aspect of the present invention, there is provided a method of screening an object as specified in claim 9.

Embodiments of the present invention provide a handheld microwave imaging device that provides screening of objects, such as persons and other items. The imaging device includes an antenna array of antenna elements, each capable of being programmed with a respective direction coefficient to direct microwave illumination toward a target associated with the object, and each capable of being programmed with a respective additional direction coefficient to receive reflected microwave illumination reflected from the target. The imaging device further includes a processor operable to measure an intensity of the reflected microwave illumination to determine a value of a voxel within a microwave image of the object. The antenna array is compliantly mounted in a first portion of a support structure, while a second portion of the support structure defines a handle for enabling a user to control movement of the device.

In one embodiment, the processor is operable to construct the microwave image of the object by scanning multiple targets within a volume associated with the object to measure the respective intensity of reflected microwave illumination from each of the targets. In a further embodiment, the handheld microwave imaging device is designed for use in screening the object by capturing successive microwave images of the object. Each of the successive microwave images of the object can be displayed on a display at a predetermined frame rate. For example, in an exemplary embodiment, the display is compliantly mounted within the support structure.

In another embodiment, each of the antenna elements is configured to receive microwave illumination from a microwave source and to direct the reflected microwave illumination towards a microwave receiver. In an exemplary embodiment, the support structure further includes a third portion within which the microwave source and microwave receiver are compliantly mounted.

Embodiments of the present invention further provide a method for screening an object using a handheld microwave imaging device including an array of programmable microwave antenna elements. The method includes positioning the array with respect to the object to capture a microwave image of a volume associated with the object, programming each of the microwave antenna elements with a respective direction coefficient to direct microwave illumination towards a target within the volume, measuring the intensity of reflected microwave illumination reflected from the target to determine a voxel value in the microwave image of the object and repeating the programming and measuring for a plurality of targets associated with the object to construct the microwave image of the object. The method further includes enabling manual movement of the array with respect to the object to obtain successive microwave images of the object.

Embodiments of the present invention are described below, by way of example only, with reference to the accompanying drawings, in which:

FIG. 1 is a top view of an exemplary handheld microwave imaging device, in accordance with embodiments of the present invention;

FIG. 2 is a side view of the handheld microwave imaging device of FIG. 1;

FIG. 3 is a pictorial representation of the operation of the handheld microwave imaging device of FIGs. 1 and 2;

FIG. 4 is a schematic block diagram illustrating an exemplary operation of an exemplary handheld microwave imaging device, in accordance with embodiments of the present invention;

FIG. 5 is a schematic diagram illustrating an exemplary operation of an exemplary reflector antenna array for use in the handheld microwave imaging device of the present invention;

FIG. 6 is a schematic diagram illustrating an exemplary operation of an exemplary transmissive antenna array for use in the handheld microwave imaging device of the present invention;

FIG. 7 is a cross-sectional view of an exemplary passive antenna element for use in a reflective antenna array, in accordance with embodiments of the present invention;

FIG. 8 is a schematic diagram illustrating an exemplary active antenna element for use in an active transmit/receive antenna array, in accordance with embodiments of the present invention; and

FIG. 9 is a flow chart illustrating an exemplary process for screening an object, such as an individual or other item, using a handheld microwave imaging device, in accordance with embodiments of the present invention.

As used herein, the terms microwave radiation and microwave illumination each refer to the band of electromagnetic radiation having wavelengths between 0.3 mm and 30 cm, corresponding to frequencies of about 1 GHz to about 1,000 GHz. Thus, the terms microwave radiation and microwave illumination each include traditional microwave radiation, as well as what is commonly known as millimeter wave radiation.

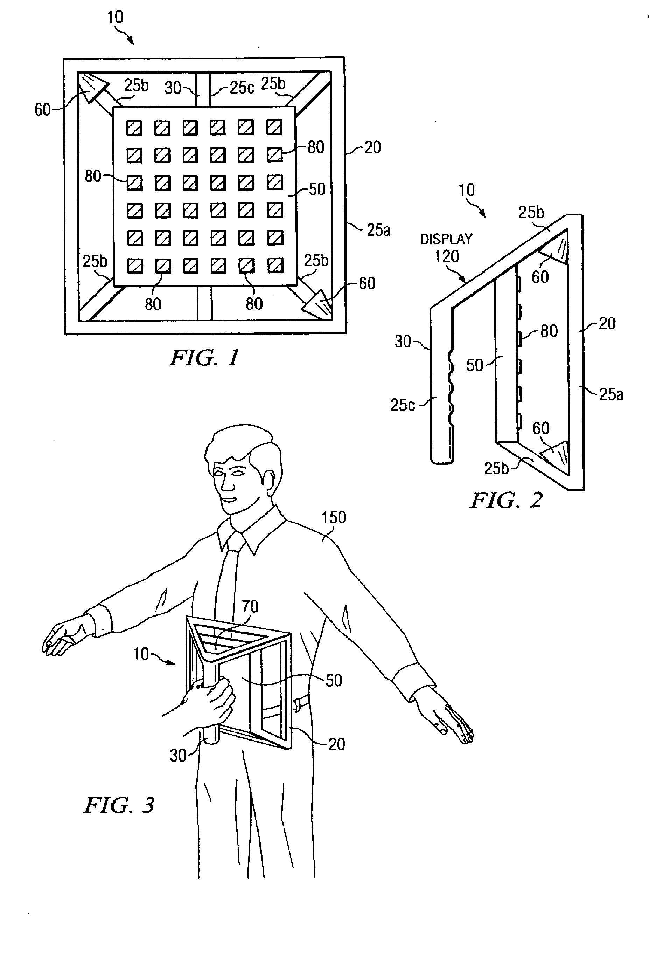

Referring now to FIGs. 1-3, there is illustrated an exemplary handheld microwave imaging device 10, in accordance with embodiments of the present invention. FIG. 1 is a top view of the handheld microwave imaging device 10, FIG. 2 is a side view of the handheld imaging device 10 and FIG. 3 illustrates an exemplary operation of the handheld microwave imaging device 10. As can be seen in FIGs. 1 and 2, the microwave imaging device 10 includes an array 50 of antenna elements 80, each capable of transmitting, receiving and/or reflecting microwave radiation to capture a microwave image of an object 150 (e.g., suitcase, human subject, as shown in FIG. 3, or any other item of interest). The size of the array 50 is variable, depending upon the desired resolution. For example, in one embodiment, a 30 cm x 30 cm array is capable of producing a microwave image with a 1 cm resolution.

Each of the antenna elements 80 is programmable with a respective direction coefficient (e.g., a transmission coefficient or a reflection coefficient) to direct a beam of microwave radiation towards a target. As used herein, the term "target" refers to a point or area/volume in 3D space corresponding to a voxel or a plurality of voxels in a microwave image of the object 150. In addition, each of the antenna elements 80 is also programmable with an additional respective direction coefficient (e.g., a transmission coefficient or a reflection coefficient) to receive reflected microwave illumination reflected from the target.

In one embodiment, the array 50 is a passive programmable reflector array composed of reflective or transmissive antenna elements 80 that reflect or transmit microwave radiation to and/or from one or more microwave antennas 60. For example, each of the reflective or transmissive antenna elements 80 can be programmed with a respective direction coefficient to reflect or transmit microwave illumination emitted from one of the microwave antennas 60 towards the target. In addition, each of the reflective or transmissive antenna elements 80 can be programmed with an additional respective direction coefficient to reflect or transmit microwave illumination reflected from the target towards one of the microwave antennas 60. A single microwave antenna 60 can serve as both the source and receiver of microwave radiation, or separate microwave antennas 60 can be used for illuminating the array 50 and receiving reflected microwave illumination from the array 50, the latter being illustrated in FIGs. 1 and 2.

In another embodiment, the array 50 is an active transmitter/receiver array composed of active antenna elements 80, each capable of producing and transmitting microwave radiation and each capable of receiving and capturing reflected microwave radiation. In this embodiment, microwave source/receive antennas 60 are not used, as the array 50 operates as the source of microwave radiation.

The handheld imaging device 10 further includes a support structure 20 within which the antenna array 50 is compliantly mounted. In addition, in embodiments in which the handheld imaging device 10 contains microwave source/receive antenna(s) 60, the microwave source/receive antenna(s) 60 are also compliantly mounted within the support structure 20. The support structure 20 further provides a handle 30 that enables a user to control movement of the handheld imaging device 10 while screening the object 150.

In the example shown in FIGs. 1 and 2, the support structure 20 includes a first rectangular portion 25a angularly connected at each of the corners thereof to respective second portions 25b. Each of the second portions 25b includes a recess (not specifically shown) within which a respective corner of the antenna array 50 is compliantly mounted. Two of the second portions 25b include extensions that mate at an end opposite the first portion 25a. The mated end of the second portions 25b is angularly connected to a third portion 25c of the support structure 20. The third portion 25c defines the handle 30. In other embodiments, the antenna array 50 is mounted in any type of support structure 20 that includes a handle 30.

In embodiments in which the antenna elements 80 are reflecting antenna elements, the microwave antenna(s) 60 are positioned within the support structure 20 to illuminate the reflecting antenna elements 80 and receive reflected microwave illumination from the reflecting antenna elements 80. For example, as shown in FIGs. 1 and 2, the microwave antenna(s) 60 are compliantly mounted between the first portion 25a and respective second portions 25b at respective corners of the first portion 25a.

In embodiments in which the antenna elements are transmissive antenna elements, the microwave source antenna 60 is positioned within the support structure 20 to illuminate the transmissive antenna elements 80 such that the microwave illumination passes through the array 50 towards the target. In addition, the microwave receive antenna 60 is positioned on the support structure 20 to receive the reflected microwave illumination reflected from the target and transmitted through the array 50. For example, when using a transmissive antenna array 50, the antenna array 50 can be compliantly mounted within the first portion 25a, while the microwave antenna(s) 60 can be compliantly mounted on another portion (not shown) connected to the opposite ends of the second portions 25b of the support structure 20.

In operation, a user positions the microwave imaging device 10 at a small distance from the object 150, such that the antenna array 50 is opposite from and parallel to the surface of the object 150. For example, in an exemplary embodiment, the user positions the microwave imaging device 10 anywhere between one centimeter and three feet from the object 150. The microwave imaging device 10 emits microwave radiation over a particular volume of the object 150, and receives reflected microwave illumination reflected from the illuminated object volume in order to capture a microwave image of that object volume. Specifically, the microwave imaging device 10 captures a microwave image of a particular object volume by scanning multiple targets within the volume to measure the respective intensity of reflected microwave illumination from each of those targets. The measured intensity from each target represents a voxel within the microwave image of the object volume. In an exemplary embodiment, the microwave imaging device 10 operates at a frequency that enables potentially millions of targets in a volume to be scanned per second.

The resulting microwave image is displayed on a display 120 associated with the microwave imaging device 10. In one embodiment, the display 120 is compliantly mounted within the support structure 20 of the microwave imaging device 10. For example, as shown in FIGs. 2 and 3, the display 120 is located on a top surface of the support structure 20 adjacent the handle 30. In other embodiments, the display 120 is located remote from the support structure 20. By way of example, but not limitation, the display 120 can be included within a set of goggles for private viewing by the user or located within a separate viewing area. Since the microwave illumination emitted from the microwave imaging device 10 is primarily perpendicular to the surface of the object 150, specular reflections in the resultant image can be limited, thus reducing "shadows" in the image.

To screen the object 150 for weapons and other types of contraband, the user moves the handheld imaging device 10 over the surface of the object 150 to capture successive microwave images of the object 150. For example, in one embodiment, the microwave imaging device 10 operates at a frame rate of approximately thirty frames per second. However, in other embodiments, the microwave imaging device 10 operates at a frame rate greater than or less than 30 frames per second, depending upon the desired image quality. Since the scanning frequency of the microwave imaging device 10 is orders of magnitude greater than the frame rate, any motion in the handheld imaging device 10 during the capture of an image frame can be compensated for in software.

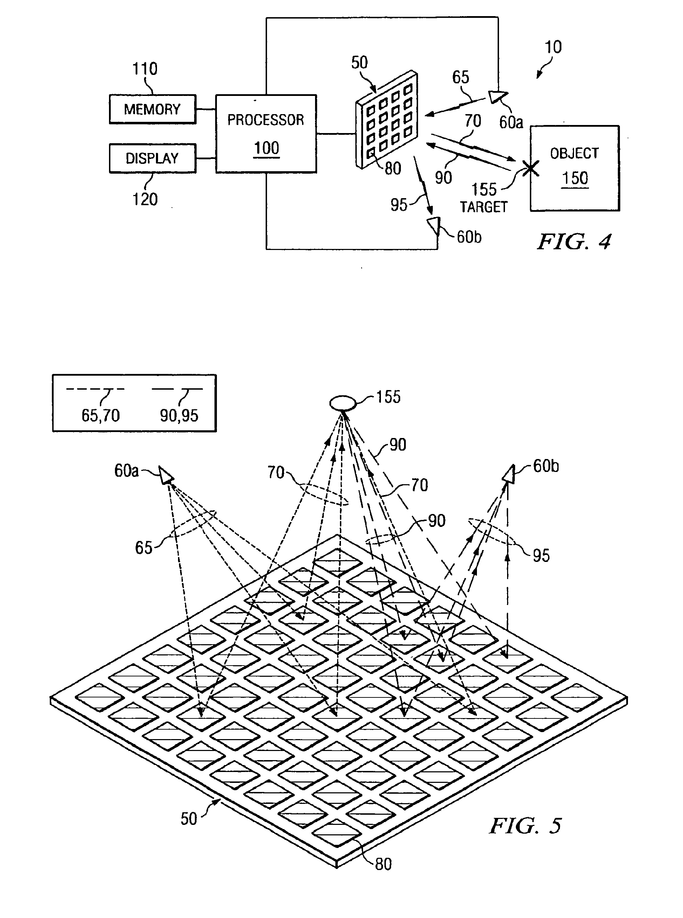

FIG. 4 is a schematic block diagram illustrating a simplified exemplary operation of the microwave imaging device 10, in accordance with embodiments of the present invention. In FIG. 4, the antenna array 50 includes reflecting antenna elements 80, each capable of being programmed with a respective reflection coefficient to reflect microwave illumination. Therefore, when a microwave source 60a transmits a beam of microwave illumination 65 towards the antenna array 50, the reflecting antenna elements 80 can be programmed to reflect microwave illumination 70 towards a target 155 on the object 150 being imaged. In addition, when reflected microwave illumination 90 reflected from the target 155 is received at the antenna array 50, the reflecting antenna elements 80 can be programmed to reflect microwave illumination 95 towards the microwave receiver 60b.

The microwave imaging device 10 further includes a processor 100, computer-readable medium 110 and a display 120. The processor 100-includes any hardware, software, firmware, or combination thereof for controlling the array 50 and processing the received microwave radiation reflected from the target 155 for use in constructing a microwave image of the object 150. For example, the processor 100 may include one or more microprocessors, microcontrollers, programmable logic devices, digital signal processors or other type of processing devices that are configured to execute instructions of a computer program, and one or more memories (e.g., cache memory) that store the instructions and other data used by the processor 100. The memory 110 includes any type of data storage device, including but not limited to, a hard drive, random access memory (RAM), read only memory (ROM), compact disc, floppy disc, ZIP® drive, tape drive, database or other type of storage device or storage medium.

The processor 100 operates to program the antenna array 50 to illuminate multiple targets 155 on the object 150. In exemplary embodiments, the processor 100 programs respective amplitude/phase delays or amplitude/phase shifts into each of the individual antenna elements 80 in the array 50 to illuminate each target 155 on the object 150. In addition, the processor 100 programs respective amplitude/phase delays or amplitude/phase shifts into each of the individual antenna elements 80 in the array 50 to receive reflected microwave illumination from each target 155 on the object 150. In embodiments using phase shifts, the programmed phase shifts can be either binary phase shifts or continuous phase shifts.

The processor 100 is further capable of constructing a microwave image of the object 150 using the intensity of the reflected microwave radiation captured by the array 50 from each target 155 on the object 150. For example, in embodiments in which the array 50 is a reflector array, the microwave receiver 60b is capable of combining the reflected microwave radiation reflected from each antenna element 80 in the array 50 to produce a value of the effective intensity of the reflected microwave radiation at the target 155. The intensity value is passed to the processor 100, which uses the intensity value as the value of a pixel or voxel corresponding to the target 155 on the object 150. In other embodiments in which the reflected microwave radiation represents the intensity of an area/volume of voxels, for each microwave image of a target 155 (area/volume in 3D space), the processor 100 measures a Fourier transform component of the desired image of the object 150. The processor 100 performs an inverse Fourier transform using the measured Fourier transform components to produce the image of the object 150.

The resulting microwave image of the object 150 can be passed from the processor 100 to the display 120 to display the microwave image. In one embodiment, the display 120 is a two-dimensional display for displaying three-dimensional microwave images of the object 150 or one or more one-dimensional or two-dimensional microwave images of the object 150. In another embodiment, the display 120 is a three-dimensional display capable of displaying three-dimensional microwave images of the object 150.

FIG. 5 is a schematic diagram of a top view of an exemplary array 50 for reflecting microwave radiation, in accordance with embodiments of the present invention. In FIG. 5, a source beam 65 of microwave radiation transmitted from a microwave source 60a is received by various antenna elements 80 in the array 50. The microwave source 60a can be any source sufficient for illuminating the array 50, including, but not limited to, a point source, a horn antenna or any other type of antenna. The antenna elements 80 within the array 50 are each programmed with a respective phase-shift to direct a transmit beam 70 of reflected microwave radiation towards a target 155. The phase-shifts are selected to create positive (constructive) interference between all of the microwave rays within the beam of reflected microwave radiation 70 at the target 155. Ideally, the phase-shift of each of the antenna elements 80 is adjusted to provide the same phase delay for each microwave ray of the reflected microwave radiation 70 from the source (antenna elements 80) to the target 155.

In a similar manner, as shown in FIG. 5, a reflect beam 90 of microwave radiation reflected from the target 155 and received at the array 50 can be reflected as a receive beam 95 of reflected microwave radiation towards a microwave receiver 60b. Again, the phase-shifts are selected to create positive (constructive) interference between all of the microwave rays within the beam of reflected microwave radiation 90 at the microwave receiver 60b. Although the microwave receiver 60b is shown at a different spatial location than the microwave source 60a, it should be understood that in other embodiments, the microwave source 60a can be positioned in the same spatial location as the microwave receiver 60b as a separate antenna or as part of the microwave receiver 60b (e.g., a confocal imaging system).

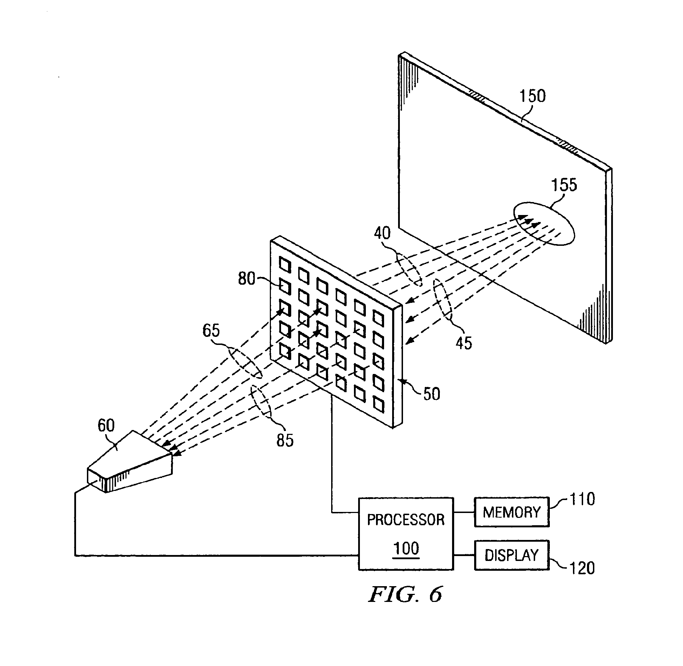

FIG. 6 is a schematic diagram of an exemplary handheld microwave imaging device 10 using a transmissive array 50 for directing microwave illumination, in accordance with embodiments of the present invention. In FIG. 6, the microwave antenna (e.g., horn) 60 functions as both a microwave source and a microwave receiver. The horn 60 is located behind the array 50 to illuminate the array 50 from behind (i.e., the array 50 is situated between the target 155 and the horn 60).

In operation, microwave illumination 65 transmitted from horn 60 is received by various antenna elements 80 in the array 50. The antenna elements 80 in array 50 are each programmed with a respective transmission coefficient to direct transmitted microwave illumination 40 towards a target 155 on the object 150. The transmission coefficients are selected to create positive interference of the transmitted microwave illumination 40 from each of the antenna elements 80 at the target 155. Reflected microwave illumination 45 reflected from the target 155 is received by various antenna elements 80 in the array 50. The antenna elements 80 in array 50 are again each programmed with a respective transmission coefficient to direct transmitted microwave illumination 85 towards horn 60.

The horn 60 combines the transmitted microwave radiation 85 from each antenna element 80 in the array 50 to produce a value of the effective intensity of the reflected microwave radiation 45 at the target 155. The intensity value is passed to the processor 100, which uses the intensity value as the value of a pixel or voxel corresponding to the target 155 on the object 150. The processor 100 constructs a microwave image of the object 150 using the intensity of the reflected microwave radiation 45 captured by the array 50 from each target 155 on the object 150. The resulting microwave image of the object 150 can be passed from the processor 100 to the display 120 to display the microwave image.

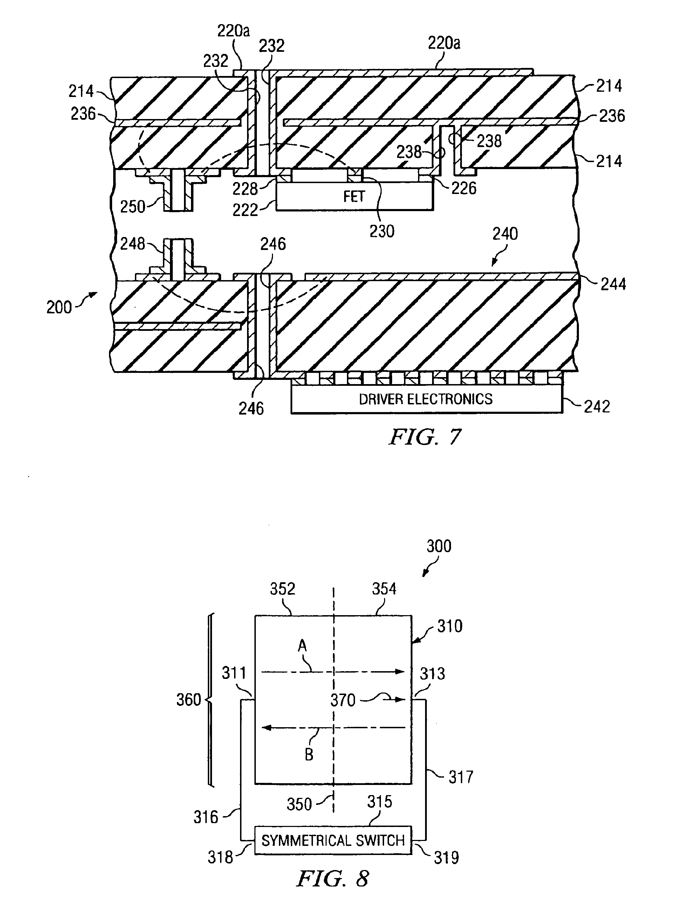

FIG. 7 illustrates a cross-sectional view of a reflecting antenna element 200 (corresponding to antenna element 80 in FIGs. 1-6) that operates to reflect electromagnetic radiation with varying phase depending on the impedance state of the antenna element 200. The reflecting antenna element 200 includes an antenna (patch antenna 220a) and a non-ideal switching device (surface mounted field effect transistor "FET" 222).

The reflecting antenna element 200 is formed on and in a printed circuit board substrate 214 and includes the surface mounted FET 222, the patch antenna 220a, a drain via 232, a ground plane 236 and a source via 238. The surface mounted FET 222 is mounted on the opposite side of the printed circuit board substrate 214 as the planar patch antenna 220a and the ground plane 236 is located between the planar patch antenna 220a and the surface mounted FET 222. The drain via 232 connects the drain 228 of the surface mounted FET 222 to the planar patch antenna 220a and the source via 238 connects the source 226 of the surface mounted FET 222 to the ground plane 236.

In exemplary embodiments, the reflector antenna array is connected to a controller board 240 that includes driver electronics. The example controller board 240 depicted in FIG. 7 includes a ground plane 244, a drive signal via 246, and driver electronics 242. The controller board 240 also includes connectors 248 that are compatible with connectors 250 of the reflector antenna array. The connectors 248 and 250 of the two boards can be connected to each other, for example, using wave soldering. It should be understood that in other embodiments, the FET 222 can be surface mounted on the same side of the printed circuit board substrate 214 as the planar patch antenna 220a. Additionally, the driver electronics 242 can be soldered directly to the same printed circuit board in which the reflecting antenna element 200 is built.

The patch antenna element 220a functions to reflect with more or less phase shift depending on the impedance level of the reflecting antenna element 300. The reflecting antenna element 200 has an impedance characteristic that is a function of the antenna design parameters. Design parameters of antennas include but are not limited to, physical attributes such as the dielectric material of construction, the thickness of the dielectric material, shape of the antenna, length and width of the antenna, feed location, and thickness of the antenna metal layer.

The FET 230 (non-ideal switching device) changes the impedance state of the reflecting antenna element 200 by changing its resistive state. A low resistive state (e.g., a closed or "short" circuit) translates to a low impedance. Conversely, a high resistive state (e.g., an open circuit) translates to a high impedance. A switching device with ideal performance characteristics (referred to herein as an "ideal" switching device) produces effectively zero impedance ($Z = 0$) when its resistance is at its lowest state and effectively infinite impedance ($Z = \infty$) when its resistance is at its highest state. As described herein, a switching device is "on" when its impedance is at its lowest state (e.g., $Z_{on} = 0$) and "off" when its impedance is at its highest state (e.g., $Z_{off} = \infty$). Because the on and off impedance states of an ideal switching device are effectively $Z_{on} = 0$ and $Z_{off} = \infty$, an ideal switching device is able to provide the maximum phase shift without absorption of electromagnetic radiation between the on and off states. That is, the ideal switching device is able to provide switching between 0 and 180 degree phase states. In the case of an ideal switching device, maximum phase-amplitude performance can be achieved with an antenna that exhibits any finite non-zero impedance.

In contrast to an ideal switching device, a "non-ideal" switching device is a switching device that does not exhibit on and off impedance states of $Z_{on} = 0$ and $Z_{off} = \infty$, respectively. Rather, the on and off impedance states of a non-ideal switching device are typically, for example, somewhere between $0 < |Z_{on}| < |Z_{off}| < \infty$. However, in some applications, the on and off impedance states may even be $|Z_{off}| <= |Z_{on}|$. A non-ideal switching device may exhibit ideal impedance characteristics within certain frequency ranges (e.g., < 10 GHz) and highly non-ideal impedance characteristics at other frequency ranges (e.g., > 20 GHz).

Because the on and off impedance states of a non-ideal switching device are somewhere between $Z_{on} = 0$ and $Z_{off} = \infty$, the non-ideal switching device does not necessarily provide the maximum phase state performance regardless of the impedance of the corresponding antenna, where maximum phase state performance involves switching between 0 and 180 degree phase states. In accordance with one embodiment of the invention, the reflecting antenna element 200 of FIG. 7 is designed to provide optimal phase performance, where the optimal phase state performance of a reflecting antenna element is the point at which the reflecting element is closest to switching between 0 and 180 degree phase-amplitude states. In an exemplary embodiment, to achieve optimal phase state performance, the antenna element 200 is configured as a function of the impedance of the non-ideal switching device (FET 230). For example, the antenna element 200 can be designed such that the impedance of the antenna element 200 is a function of impedance characteristics of the FET 230.

Further, the antenna element 200 is configured as a function of the impedance of the non-ideal switching device (FET 230) in the on state, $Z_{on}$, and the impedance of the non-ideal switching device 230 in the off state, $Z_{off}$. In a particular embodiment, the phase state performance of the reflecting antenna element 200 is optimized when the antenna element 200 is configured such that the impedance of the antenna element 200 is conjugate to the square root of the impedance of the non-ideal switching device 230 when in the on and off impedance states, $Z_{on}$ and $Z_{off}$. Specifically, the impedance of the antenna element 200 is the complex conjugate of the geometric mean of the on and off impedance states, $Z_{on}$ and $Z_{off}$, of the corresponding non-ideal switching device 230. This relationship is represented as:

$$Z_{antenna}^{*} = \sqrt{Z_{on} Z_{off}}, \qquad (1)$$

where 0* denotes a complex conjugate. The above-described relationship is derived using the well-known formula for the complex reflection coefficient between a source impedance and a load impedance. Choosing the source to be the antenna element 200 and the load to be the non-ideal switching device 230, the on-state reflection coefficient is set to be equal to the opposite of the off-state reflection coefficient to arrive at equation (1).

Designing the antenna element 200 to exhibit optimal phase-amplitude performance involves determining the on and off impedances, $Z_{on}$ and $Z_{off}$ of the particular non-ideal switching device that is used in the reflecting antenna element 200 (in this case, FET 230). Design parameters of the antenna element 200 are then manipulated to produce an antenna element 200 with an impedance that matches the relationship expressed in equation (1) above. An antenna element 200 that satisfies equation (1) can be designed as long as $Z_{on}$ and $Z_{off}$ are determined to be distinct values.

Another type of switching device, other than the surface mounted FET 230 shown in FIG. 7, that exhibits non-ideal impedance characteristics over the frequency band of interest is a surface mount diode. However, although surface mounted diodes exhibit improved impedance characteristics over the frequency band of interest compared to surface mounted FETs, surface mounted FETs are relatively inexpensive and can be individually packaged for use in reflector antenna array applications.

In a reflector antenna array that utilizes FETs as the non-ideal switching devices, the beam-scanning speed that can be achieved depends on a number of factors including signal-to-noise ratio, crosstalk, and switching time. In the case of a FET, the switching time depends on gate capacitance, drain-source capacitance, and channel resistance (i.e., drain-source resistance). The channel resistance is actually space-dependent as well as time-dependent. In order to minimize the switching time between impedance states, the drain of the FET is preferably DC-shorted at all times. The drain is preferably DC-shorted at all times because floating the drain presents a large off-state channel resistance as well as a large drain-source capacitance due to the huge parallel-plate area of the patch antenna. This implies that the antenna is preferably DC-shorted but one wishes the only "rf short" the antenna sees be at the source. Therefore, the additional antenna/drain short should be optimally located so as to minimally perturb the antenna.

It should be understood that other types of antennas can be used in the reflecting antenna element 200, instead of the patch antenna 220a. By way of example, but not limitation, other antenna types include dipole, monopole, loop, and dielectric resonator type antennas. In addition, in other embodiments, the reflecting antenna element 200 can be a continuous phase-shifted antenna element 200 by replacing the FETs 230 with variable capacitors (e.g., Barium Strontium Titanate (BST) capacitors). With the variable capacitor loaded patches, continuous phase shifting can be achieved for each antenna element 200, instead of the binary phase shifting produced by the FET loaded patches. Continuous phased arrays can be adjusted to provide any desired phase shift in order to steer a microwave beam towards any direction in a beam scanning pattern.

FIG. 8 illustrates an example of an active antenna element 300 (corresponding to an antenna element 80 in FIGs. 1-6) for use in an active transmit/receive or reflective array. The active antenna element 300 is a broadband binary phased antenna element including an antenna 310 connected to a respective switch 315. The switch 315 can be, for example, a single-pole double-throw (SPDT) switch or a double-pole double-throw (DPDT) switch. The operating state of the switch 315 controls the phase of the respective antenna element 300. For example, in a first operating state of the switch 315, the antenna element 300 may be in a first binary state (e.g., 0 degrees), while in a second operating state of the switch 315, the antenna element 300 may be in a second binary state (e.g., 180 degrees). The operating state of the switch 315 defines the terminal connections of the switch 315. For example, in the first operating state, terminal 318 may be in a closed (short circuit) position to connect feed line 316 between the antenna 310 and the switch 315, while terminal 319 may be in an open position. The operating state of each switch 315 is independently controlled by a control circuit (not shown) to individually set the phase of each antenna element 300.

As used herein, the term symmetric antenna 310 refers to an antenna that can be tapped or fed at either of two feed points 311 or 313 to create one of two opposite symmetric field distributions or electric currents. As shown in FIG. 8, the two opposite symmetric field distributions are created by using a symmetric antenna 310 that is symmetric in shape about a mirror axis 350 thereof. The mirror axis 350 passes through the antenna 310 to create two symmetrical sides 352 and 354. The feed points 311 and 313 are located on either side 352 and 354 of the mirror axis 350 of the antenna 310. In one embodiment, the feed points 311 and 313 are positioned on the antenna 310 substantially symmetrical about the mirror axis 350. For example, the mirror axis 350 can run parallel to one dimension 360 (e.g., length, width, height, etc.) of the antenna 310, and the feed points 311 and 313 can be positioned near a midpoint 370 of the dimension 360. In FIG. 8, the feed points 311 and 313 are shown positioned near a midpoint 370 of the antenna 310 on each side 352 and 354 of the mirror axis 350.

The symmetric antenna 310 is capable of producing two opposite symmetric field distributions, labeled A and B. The magnitude (e.g., power) of field distribution A is substantially identical to the magnitude of field distribution B, but the phase of field distribution A differs from the phase of field distribution B by 180 degrees. Thus, field distribution A resembles field distribution B at $\pm$ 180° in the electrical cycle.

The symmetric antenna 310 is connected to the symmetric switch 315 via feed lines 316 and 317. Feed point 311 is connected to terminal 318 of the symmetric switch 315 via feed line 316, and feed point 313 is connected to terminal 319 of the symmetric switch 315 via feed line 317. As used herein, the term symmetric switch refers to either a SPDT or DPDT switch in which the two operating states of the switch are symmetric about the terminals 318 and 319.

For example, if in a first operating state of a SPDT switch, the impedance of a channel (termed channel $\alpha$) is $10\Omega$ and the impedance of another channel (termed channel $\beta$) is $1k\Omega$, then in the second operating state of the SPDT switch, the impedance of channel $\alpha$ is $1k\Omega$ and the impedance of channel $\beta$ is $10\Omega$. It should be understood that the channel impedances are not required to be perfect opens or shorts or even real. In addition, there may be crosstalk between the channels, as long as the crosstalk is state-symmetric. In general, a switch is symmetric if the S-parameter matrix of the switch is identical in the two operating states of the switch (e.g., between the two terminals 318 and 319).

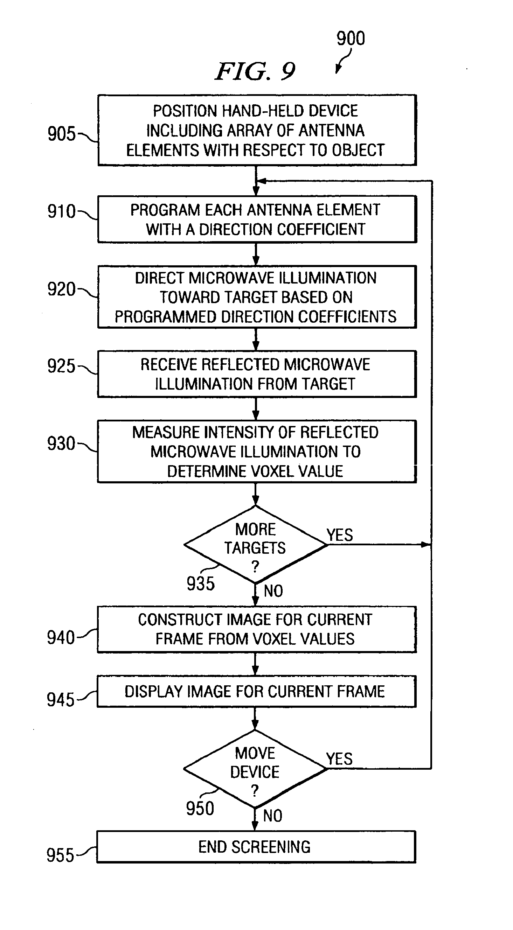

FIG. 9 is a flow chart illustrating an exemplary process 900 for screening an object, such as an individual or other item, using a handheld microwave imaging device that includes an array of programmable antenna elements, in accordance with embodiments of the present invention. Initially, at block 905, a user positions the handheld microwave imaging device with respect to the object in order to capture a microwave image of a volume associated with the object. Thereafter, at block 910, each of the individual antenna elements within the array is programmed with a respective direction coefficient to direct microwave illumination towards a target within the volume at block 915. Microwave illumination reflected from the target is received at the array at block 920 by programming each of the individual antenna elements within the array with a respective additional direction coefficient.

At block 925, the intensity of reflected microwave illumination reflected from the target is measured to determine a voxel value in the microwave image of the object. If there are more targets to be scanned in the current microwave image, at block 935, the antenna elements are again programmed at blocks 910-925 to measure the intensity of reflected microwave illumination reflected from other targets on the object. If the current scan is complete, at block 940, a microwave image of the object is constructed from all of the measured voxel values for the current frame, and at block 945, the microwave image for the current frame is displayed. At block 950, if the user moves the handheld microwave imaging device with respect to the object to image another volume on the object, the process is repeated for the next image frame at blocks 910-945. Otherwise, the screening ends at block 955.

As will be recognized by those skilled in the art, the innovative concepts described in the present application can be modified and varied over a wide range of applications.

The disclosures in United States patent application no. 11/303,581, from which this application claims priority, and in the abstract accompanying this applications are incorporated herein by reference.

## Claims

1. A handheld microwave imaging device (10), comprising:

   an antenna array (50) including a plurality of antenna elements (80), each capable of being programmed with a respective direction coefficient to direct microwave illumination toward a target (155) associated with an object (150), said antenna elements (80) being
   capable of being programmed with a respective additional direction coefficient to receive reflected microwave illumination reflected from the target (155);
   a processor (100) operable to measure an intensity of said reflected microwave illumination to determine a value of a voxel within a microwave image of said object (150) constructed by said processor (100); and
   a support structure (20) including a first portion (25b) within which said antenna array (50) is compliantly mounted and a second portion (25c) defining a handle (30) for enabling a user to control movement of said device (10).

2. A device according to claim 1, wherein each of said plurality of antenna elements (80) is configured to receive microwave illumination from a microwave source (60a) and direct said microwave illumination toward the target (155) based on said respective programmed direction coefficient.

3. A device according to claim 2, wherein each of said plurality of antenna elements (80) is configured to receive said reflected microwave illumination reflected from said target (155) and direct said reflected microwave illumination towards a microwave receiver (60b) based on said respective programmed additional direction coefficient.

4. A device according to any preceding claim, wherein said support structure (20) includes a third portion (25a) within which said microwave source (60a) and said microwave receiver (60b) are compliantly mounted.

5. A device according to claim 4, wherein said microwave source (60a) and said microwave receiver (60b) are co-located.

6. A device according to any preceding claim, wherein said device (10) is designed for use in screening said object (150) by capturing successive microwave images of said object (150), and comprises a display (120) operably coupled to said processor (100) to display said microwave image of said object (150).

7. A device according to claim 6, wherein said display (120) is compliantly mounted in said support structure (20).

8. A device according to claim 6 or 7, wherein said display (120) is operable to display said successive microwave images at a predetermined frame rate.

9. A method of screening an object (150) using a handheld microwave imaging device (10) including an array (50) of programmable microwave antenna elements (80), said method including the steps of:

positioning (905) the array (50) with respect to the object (150) to capture a microwave image of a volume associated with the object (150);
programming (910) each of the microwave antenna elements (80) with a respective direction coefficient to direct (915) microwave illumination towards a target (155) within the volume;
measuring (930) the intensity of microwave illumination reflected from the target (155) to determine a voxel value in the microwave image of the object (150);
repeating (935) said programming and said measuring for a plurality of targets (155) associated with the object (150) to construct (940) the microwave image of the object (150); and
enabling (950) manual movement of the array (50) with respect to the object (150) to obtain successive microwave images of the object (150).

10. A method according to claim 9, including the step of:

compliantly mounting said array (50) within a first portion (25b) of a support structure (20); and
defining a handle (30) within a second portion (25c) of the support structure (20) to enable a user to control movement of the handheld imaging device (10).

FIG. 1

FIG. 2

FIG. 3

FIG. 4

FIG. 5

*FIG. 6*

FIG. 7

FIG. 8

*900*

## FIG. 9

905 — POSITION HAND-HELD DEVICE INCLUDING ARRAY OF ANTENNA ELEMENTS WITH RESPECT TO OBJECT

910 — PROGRAM EACH ANTENNA ELEMENT WITH A DIRECTION COEFFICIENT

920 — DIRECT MICROWAVE ILLUMINATION TOWARD TARGET BASED ON PROGRAMMED DIRECTION COEFFICIENTS

925 — RECEIVE REFLECTED MICROWAVE ILLUMINATION FROM TARGET

930 — MEASURE INTENSITY OF REFLECTED MICROWAVE ILLUMINATION TO DETERMINE VOXEL VALUE

MORE TARGETS ? — 935 — YES

NO

940 — CONSTRUCT IMAGE FOR CURRENT FRAME FROM VOXEL VALUES

945 — DISPLAY IMAGE FOR CURRENT FRAME

MOVE DEVICE ? — 950 — YES

NO

955 — END SCREENING

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11303581 B